# EUROPÄISCHE PATENTSCHRIFT

(11) **EP 0 714 527 B1**
(45) Veröffentlichungstag und Bekanntmachung des Hinweises auf die Patenterteilung: **02.01.1997**
(21) Anmeldenummer: 94922227.7
(22) Anmeldetag: 08.08.1994
(51) Int. Cl.: G06F 1/16

(54) **ELEKTRONISCHES GERÄT**
ELECTRONIC DEVICE
APPAREIL ELECTRONIQUE

(30) Priorität: 19.08.1993 DE 9312455 U
(43) Veröffentlichungstag der Anmeldung: 05.06.1996
(73) Patentinhaber: SIEMENS AKTIENGESELLSCHAFT, 80333 München (DE)
(72) Erfinder: HAHN, Karl-Heinz, D-76344 Eggenstein-Leopoldshafen (DE)
(86) Internationale Anmeldenummer: DE9400916
(87) Internationale Veröffentlichungsnummer: WO9505631

(56) Entgegenhaltungen:
- WO-A-90/07742
- DE-U- 9 211 955
- US-A- 4 903 221
- US-A- 5 175 672

## Beschreibung

Die Erfindung betrifft ein elektronisches Gerät nach dem Oberbegriff des Anspruchs 1.

Aus der DE-PS 39 36 261 ist ein tragbarer Computer, ein sogenannter "Laptop-Computer" bekannt, der eine Anzeigeeinheit aufweist, die nach Art einer flachen Platte ausgebildet und drehbar gegenüber einem Grundkörper angeordnet ist. Im vorderen Bereich des Grundkörpers vor dem Drehlager der Anzeigeeinheit ist eine Tastatur fest eingebaut. Der Computer ist mit einer Verriegelungseinrichtung versehen, damit die Anzeigeeinheit zum Transport in einer Stellung festgelegt werden kann, in der sie die am Grundkörper angeordnete Tastatur abdeckt. Zum Betreiben wird der Computer auf einen Tisch gestellt, die Verriegelung geöffnet und die Anzeigeeinheit in eine zweite Stellung aufgeschwenkt, in der sie ein Bedienen der Tastatur und ein Beobachten der Anzeigeeinheit ermöglicht. Bei diesem elektronischen Gerät wird zur Bedienbarkeit also immer eine geeignete Auflage etwa in Tischhöhe benötigt.

WO 90/07742, zeigt ein elektronisches Gerät mit einem L-förmigen Verbindungsteil, welches die Anzeigeeinheit mit dem Gehäuse der Zentraleinheit verbindet und dazu dient, die Anzeigeeinheit schräg nach oben von der Zentraleinheit wegzubewegen wobei die Vorderfläche (=Bildfläche) der Anzeigeeinheit entweder parallel zur Vorderfläche der Zentraleinheit gehalten oder in kleinem Winkel dazu geneigt werden kann.

Der Erfindung liegt die Aufgabe zugrunde, ein elektronisches Gerät zu schaffen, das auch in ungünstigen räumlichen Verhältnissen, in denen eine Unterlage für das elektronische Gerät in Tischhöhe fehlt, bedienbar ist.

Zur Lösung dieser Aufgabe weist das neue elektronische Gerät der eingangs genannten Art die im kennzeichnenden Teil des Anspruchs 1 genannten Merkmale auf. In den Unteransprüchen sind vorteilhafte Ausführungsformen der Erfindung angegeben.

Die Erfindung hat den Vorteil, daß das elektronische Gerät kaum besondere Bedingungen an seine räumliche Umgebung stellt und in nahezu jedem industriellen Umfeld betreibbar ist. Das ist besonders vorteilhaft, wenn es sich bei dem elektronischen Gerät um ein Programmiergerät für speicherprogrammierbare Steuerungen handelt, das häufig vor Ort nahe beim zu steuernden Prozeß und somit unter erschwerten Bedingungen eingesetzt werden muß. Ist ein Tisch als Unterlage für das elektronische Gerät vorhanden, so wird zur Betriebsbereitschaft die Anzeigeeinheit aus der Transportstellung um etwa 30° nach hinten geschwenkt und die Tastatur mit ihrer Rückseite in Auflager im vorderen Teil des Fußes eingehängt, so daß sie gegen Verschieben gesichert ist. Die Anordnung der Bedieneinheiten ist in diesem Fall vergleichbar mit der Anordnung bei dem bekannten Laptop-Computer. Wenn dagegen keine Tischfläche verfügbar ist, so kann bei dem erfindungsgemäßen elektronischen Gerät der Fuß mit der in Drehlagern aufgehängten Anzeigeeinheit auf den Boden gestellt werden. Damit die Anzeigeeinheit von oben gut sichtbar ist, wird sie aus der Transportstellung um etwa 90° nach hinten geschwenkt. Zur besseren Zugänglichkeit kann die Tastatur, die ein relativ geringes Gewicht aufweist, von dem Fuß abgenommen und mit der Hand gehalten oder, wenn sich der Bediener in Sitzstellung befindet, auf den Beinen abgelegt werden. Gleichermaßen ist es möglich, den Fuß an einer Wand zu befestigen, so daß sich die Anzeigeeinheit in Augenhöhe befindet. In diesem Fall kann die Tastatur sowohl in den Auflagern am Fuß gehalten als auch entnommen werden. Das neue elektronische Gerät zeichnet sich somit durch eine äußerst hohe Flexibilität am Einsatzort aus. Zudem ist es leicht zu transportieren, da es in der Transportstellung keine herausragenden Teile und sehr kompakte Abmessungen aufweist. Die Transportstellung ist mit wenigen Handgriffen zu erreichen, da lediglich die Anzeigeeinheit auf senkrechte Stellung geschwenkt und die Tastatur hochgeklappt werden müssen. Zudem schützen sich Anzeigeeinheit und Tastatur, die in der Transportstellung einander abdecken, gegenseitig vor Beschädigungen während des Transports.

Anhand der Zeichnungen, in denen Ausführungsbeispiele der Erfindung dargestellt sind, werden im folgenden die Erfindung sowie Ausgestaltungen und Vorteile näher erläutert.

Es zeigen:
- Figur 1: ein elektronisches Gerät in Betriebsstellung zur Anordnung auf einer Tischfläche,
- Figur 2: ein elektronisches Gerät in Transportstellung,
- Figur 3: einen Fuß in der Sicht von hinten,
- Figur 4: einen Fuß in Draufsicht und
- Figur 5: ein Schnittbild einer Reibbremse eines Drehlagers.

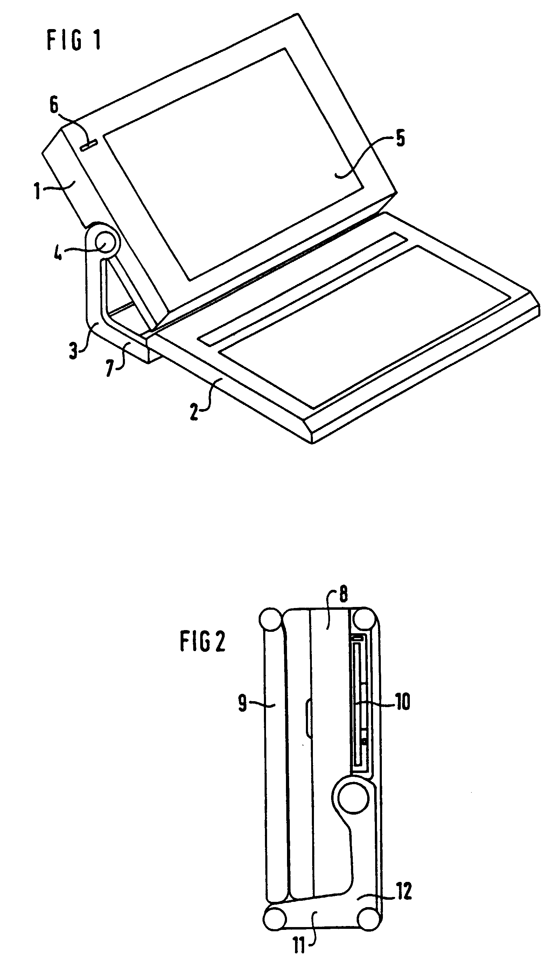

Ein erfindungsgemäßes elektronisches Gerät umfaßt nach Figur 1 eine Anzeigeeinheit 1, eine Tastatur 2 und einen Fuß, von dem in Figur 1 nur ein linkes Tragteil 3 sichtbar ist. Das elektronische Gerät kann z. B. als komfortable Bedieneinheit für eine an einem anderen Ort befindliche Recheneinheit dienen oder bereits selbst die Recheneinheit enthalten, die dann vorteilhaft im Gehäuse der Anzeigeeinheit unterzubringen ist. Die Anzeigeeinheit 1 ist an dem Fuß in zwei Drehlagern aufgehängt, von denen in Figur 1 nur das linke Drehlager 4 sichtbar ist. Dadurch kann die Anzeigeeinheit 1 ergonomisch günstig auf die Sitzposition eines Bedieners ausgerichtet werden. Die Anzeigeeinheit 1 enthält eine Anzeigefläche 5, beispielsweise ein LCD-Display. Weiterhin ist auf der Anzeigeeinheit ein Schalter 6 zum Ein- oder Ausschalten des elektronischen Gerätes angeordnet. Der Drehpunkt der Anzeigeeinrichtung 1 ist in der Nähe ihres Schwerpunktes, damit die an Reibbremsen in den Drehlagern auftretenden Kräfte gering sind. Die Tastatur 2 wird in Auflagern im vorderen Bereich des Fußes gehalten. Somit ist die relative Lage der Tastatur 2 zur Anzeigeeinheit 1 stabil und gegen ungewolltes Verschieben durch den Bediener gesichert. Ein Tastaturkabel zur elektrischen Verbindung der Tastatur 2 mit der Anzeigeeinheit 1 ist unsichtbar in einem Kabelkanal mit U-förmigem Querschnitt im Fuß verlegt. Es ist an der linken Seite der Tastatur 2 in ein Basisteil 7 des Tragteiles 3, in dem an der Vorderseite des Fußes befindlichen Kabelkanal zur rechten Seite und über das rechte Basisteil, die rechte Seitenwange und durch das rechte Drehgelenk, die in der Figur 1 verdeckt sind, in die Anzeigeeinheit 1 geführt. Damit ist das Tastaturkabel gut verstaut und behindert den Bediener nicht bei Transport, Aufbau oder Bedienung des elektronischen Geräts.

In Transportstellung ist gemäß Figur 2 die Anzeigeeinheit 8 eines elektronischen Geräts senkrecht gestellt und die Tastatur 9 hochgeklappt. Tasten und Anzeigefläche des elektronischen Gerätes sind in dieser Stellung durch robuste Gehäuseteile vorteilhaft vor Beschädigungen geschützt. In diesem Ausführungsbeispiel ist in dem elektronischen Gerät eine Recheneinheit und ein Diskettenlaufwerk 10 enthalten. An der Oberseite des elektronischen Gerätes befindet sich eine Verriegelungseinrichtung, welche ein unbeabsichtigtes Herunterfallen der Tastatur beim Transport verhindert. Ebenso wie beim betriebsbereiten Zustand dienen auch in der Transportstellung Basisteile 11 eines Fußes 12 zum sicheren Stand des elektronischen Geräts.

In der Ansicht eines Fußes von hinten sind ein linkes Tragteil 13, ein rechtes Tragteil 14 und eine Querverbindung 15 zwischen beiden Tragteilen erkennbar. Um einen guten Stand zu gewährleisten, ist die Grundfläche des Fußes mit einer rutschfesten Schicht 16 versehen. An Seitenwangen 17 und 18 der beiden Tragteile 13 bzw. 14 ragen seitlich Erhebungen 19 und 20 hervor, unter denen sich Drehlager und Reibbremse für die Aufnahme einer Anzeigeeinheit befinden.

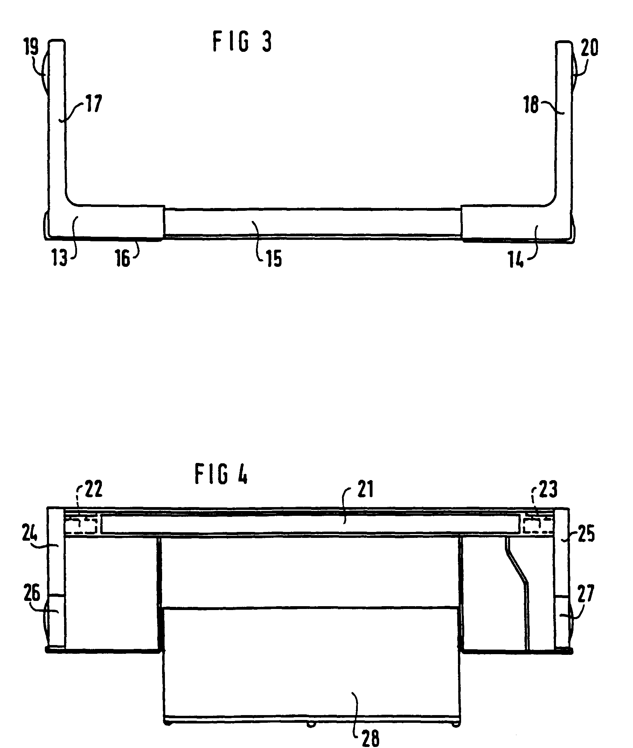

Im vorderen Teil des Fußes verläuft gemäß Figur 4 ein Kabelkanal 21, in dem ein Spiralkabel untergebracht werden kann. Zur lösbaren Befestigung der Tastatur sind bewegliche Gelenkbolzen 22 und 23 im vorderen Teil von Basisteilen 24 und 25 des Fußes vorgesehen, während im hinteren Teil Seitenwangen 26 und 27 mit Drehgelenken zur Befestigung einer Anzeigeeinheit angeordnet sind. Um die wirksame Standfläche zu erhöhen und damit ein Kippen des elektronischen Gerätes zu verhindern, weist der Fuß eine nach hinten ausziehbare Stütze 28 auf.

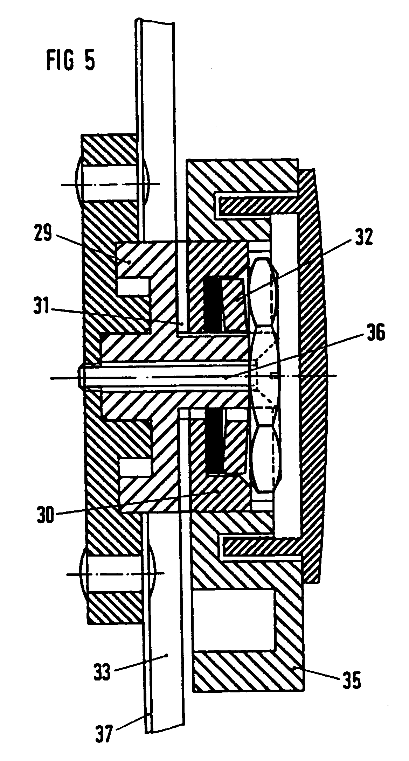

Eine Reibbremse für ein Drehgelenk besteht nach Figur 5 aus einer Bremsscheibe 29 und einem Druckstück 30 mit einem Bremsbelag 31, die mit einer Tellerfeder 32 zusammengedrückt werden. Die Verbindung der Bremsscheibe 29 zum Gehäuse 33 einer Anzeigeeinheit wird über ein Chassis hergestellt. Das Druckstück 30 wird in der Seitenwange 35 eines Fußes geführt und gehalten. Eine Schraube 36 verhindert eine axiale Auslenkung der Seitenwange 35 vom Gehäuse. Eine derartige Reibbremse hat den Vorteil, daß sie relativ wenig Platz beansprucht, sich automatisch durch die Tellerfedern 32 nachstellt und das stufenlose Schwenken der Anzeigeeinheit erlaubt.

## Patentansprüche

1. Elektronisches Gerät mit einer an zwei seitlich angeordneten Tragteilen (3) schwenkbaren Anzeigeeinheit (1) und einer Tastatur (2),
**dadurch gekennzeichnet**,
- daß die beiden seitlich angeordneten Tragteile (3) als Fuß ausgebildet sind mit jeweils einem Basisteil (7) für einen sicheren Stand und einer sich davon nach oben erstreckenden Seitenwange (17, 18), die derart ausgebildet sind, daß sie die Anzeigeeinheit (1) seitlich in etwa der Höhe der Horizontalachse durch den Schwerpunkt der Anzeigeeinheit (1) in Drehlagern der Seitenwange (17, 18) und die Tastatur (2) mit ihrem hinteren Bereich in im vorderen Bereich der Basisteile (7) angeordneten Auflagern aufnehmen.

2. Elektronisches Gerät nach Anspruch 1, **dadurch gekennzeichnet**, daß
- Tastatur (2) und Anzeigeeinheit (1) im wesentlichen als ebene Baueinheiten mit annähernd gleichem Umfang ausgebildet sind, daß
- Auf- und Drehlager derart zueinander angeordnet sind, daß die Tastatur (2) und die Anzeigeeinheit (1) in senkrechter Stellung einander unmittelbar gegenüberliegen und das elektronische Gerät etwa quaderförmig ist, und daß
- eine Verriegelung vorgesehen ist, um diese Stellung zu sichern.

3. Elektronisches Gerät nach Anspruch 1 oder 2, **dadurch gekennzeichnet**, daß
- die beiden Tragteile miteinander starr verbunden sind.

4. Elektronisches Gerät nach Anspruch 3, **dadurch gekennzeichnet**, daß
- der Fuß eine nach hinten ausstellbare Stütze (28) aufweist, um ein Kippen des Gerätes zu verhindern.

5. Elektronisches Gerät nach Anspruch 3 oder 4, **dadurch gekennzeichnet**, daß
- die Auflager im vorderen Bereich der Basisteile als lösbare Drehlager ausgeführt sind, damit die Tastatur (2) abnehmbar ist.

6. Elektronisches Gerät nach einem der Ansprüche 3 bis 5, **dadurch gekennzeichnet**, daß
- ein Tastaturkabel zur elektrischen Verbindung der Tastatur (2) mit der Anzeigeeinheit (1) über ein Auflager durch das eine Tragteil, als Spiralkabel von diesem in einem in der starren Verbindung verlaufenden Kanal (21) mit U-förmigem Querschnitt zum anderen Tragteil und über das Drehlager in dessen Seitenwange in die Anzeigeeinheit (1) geführt ist.

7. Elektronisches Gerät nach einem der vorhergehenden Ansprüche, **dadurch gekennzeichnet**, daß
- mindestens ein Drehlager der Seitenwangen mit einer Reibbremse versehen ist.

8. Elektronisches Gerät Anspruch 7, **dadurch gekennzeichnet**, daß
- die Reibbremse eine koaxial zum Drehgelenk angeordnete Bremsscheibe (29) und einen scheibenförmigen Bremsbelag (31) aufweist, die mit einer Tellerfeder (32) gegeneinander gedrückt werden.

9. Elektronisches Gerät nach einem der vorhergehenden Ansprüche, **dadurch gekennzeichnet**, daß
- es ein Programmiergerät für speicherprogrammierbare Steuerungen ist.

## Claims

1. Electronic device having a display unit (1), which can be swivelled on two laterally arranged support pieces (3), and a keyboard (2), characterised in that the two laterally arranged support pieces (3) are constructed as a foot, having a respective base portion (7) for a firm standing position and a lateral cheek (17, 18) which extends upwards away from the base portion, which lateral cheeks are constructed in such a way that they receive the display unit (1) laterally, at substantially the height of the horizontal axis through the centre of gravity of the display unit (1), in pivot bearings of the lateral cheek (17, 18) and receive the rear region of the keyboard (2) in bearings arranged in the front region of the base portions (7).

2. Electronic device according to claim 1, characterised in that
- keyboard (2) and display unit (1) are essentially constructed as planar constructional units having approximately the same circumference, in that
- bearings and pivot bearings are arranged with respect to each other in such a way that the keyboard (2) and the display unit (1) are directly opposite each other in the perpendicular position and the electronic device is substantially square in shape, and in that
- a lock is provided in order to secure this position.

3. Electronic device according to claim 1 or 2, characterised in that the two support pieces are rigidly connected to each other.

4. Electronic device according to claim 3, characterised in that the foot has a support (28) which can be drawn out to the rear in order to prevent tilting of the device.

5. Electronic device according to claim 3 or 4, characterised in that the bearings in the front region of the base portions are constructed as detachable pivot bearings in order that the keyboard (2) can be removed.

6. Electronic device according to one of the claims 3 to 5, characterised in that a keyboard cable for electrical connection of the keyboard (2) to the display unit (1) via a bearing, through the one support piece, is routed as a spiral cable in a channel (21), which extends in the rigid connection and is U-shaped in cross-section, from the one support piece to the other support piece and via the pivot bearing in the lateral cheek of said support piece into the display unit (1).

7. Electronic device according to one of the preceding claims, characterised in that at least one pivot bearing of the lateral cheeks is provided with a friction brake.

8. Electronic device according to claim 7, characterised in that the friction brake has a brake disc (29), which is arranged coaxially with respect to the pivot joint, and a disc-shaped brake lining (31), which brake disc and brake lining are pressed together with a disc spring (32).

9. Electronic device according to one of the preceding claims, characterised in that it is a programming device for programmable controls.

## Revendications

1. Appareil électronique comportant une unité d'affichage (1), qui peut basculer sur des parties porteuses (3) agencées sur les côtés, et un clavier (2),
caractérisé par le fait que
- les deux parties porteuses (3) agencées sur les côtés sont construites de façon à former un pied ayant une partie formant base (7) pour une assise sûre et un montant latéral (17, 18) qui s'étend de la base vers le haut, qui sont conçus de telle sorte qu'ils reçoivent l'unité d'affichage (1), dans des supports de rotation des montants latéraux (17, 18), sur les côtés à peu près à la hauteur de l'axe horizontal passant par le centre de gravité de l'unité d'affichage (1), et qui reçoivent la zone arrière du clavier (2) dans des supports agencés dans la zone avant des parties formant base (7).

2. Appareil électronique selon la revendication 1, caractérisé par le fait
- que le clavier (2) et l'unité d'affichage (1) sont construits sensiblement comme des éléments plats à peu près de la même taille,
- que les supports et les supports de rotation sont agencés les uns par rapport aux autres de telle sorte que le clavier (2) et l'unité d'affichage (1) se trouvent directement côte à côte en position verticale et l'appareil électronique est à peu près en forme de parallélépipède, et
- qu'un verrouillage est prévu pour assurer cette position.

3. Appareil électronique selon la revendication 1 ou 2, caractérisé par le fait que
- les deux parties porteuses sont liées de façon rigide.

4. Appareil électronique selon la revendication 3, caractérisé par le fait que
- le pied comporte un appui (28) qui peut être tiré vers l'arrière pour empêcher un basculement de l'appareil.

5. Appareil électronique selon la revendication 3 ou 4, caractérisé par le fait que
- les supports dans la zone avant des parties formant base sont construits comme des supports de rotation amovibles pour que le clavier (2) puisse être enlevé.

6. Appareil électronique selon l'une des revendications 3 à 5, caractérisé par le fait que
- un câble de clavier destiné à la liaison électrique du clavier (2) avec l'unité d'affichage (1) passe par un support au travers d'une première partie porteuse, comme câble spiralé depuis cette partie porteuse dans une conduite (21) qui s'étend dans la liaison rigide et qui a une section en forme de U, vers l'autre partie porteuse et par le support de rotation dans son montant latéral dans l'unité d'affichage (1).

7. Appareil électronique selon l'une des revendications précédentes, caractérisé par le fait que
- au moins un support de rotation des montants latéraux est muni d'un frein par frottement.

8. Appareil électronique selon la revendication 7, caractérisé par le fait que
- le frein par frottement comporte un disque de frein (29) agencé de façon coaxiale par rapport à l'articulation de rotation et une garniture de frein (31) en forme de disque, qui sont serrés l'un contre l'autre par une rondelle-ressort (32).

9. Appareil électronique selon l'une des revendications précédentes, caractérisé par le fait que
- l'appareil électronique est un appareil de pro-grammation de commandes programmables en mémoire.
